(19)

**Europäisches Patentamt**
**European Patent Office**
**Office européen des brevets**

(11) **EP 4 636 857 A1**

(12) **EUROPEAN PATENT APPLICATION**
published in accordance with Art. 153(4) EPC

(43) Date of publication:
**22.10.2025 Bulletin 2025/43**

(21) Application number: **23917091.3**

(22) Date of filing: **09.10.2023**

(51) International Patent Classification (IPC):
*H01M 4/36* (2006.01)    *H01M 4/58* (2010.01)
*H01M 4/62* (2006.01)    *H01M 4/04* (2006.01)

(52) Cooperative Patent Classification (CPC):
**H01M 4/04; H01M 4/36; H01M 4/58; H01M 4/62;**
**H01M 10/054; Y02E 60/10**

(86) International application number:
**PCT/CN2023/123524**

(87) International publication number:
**WO 2024/152623 (25.07.2024 Gazette 2024/30)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **18.01.2023  CN 202310073838**

(71) Applicant: **Contemporary Amperex Technology**
**Co., Limited**
**Ningde, Fujian 352100 (CN)**

(72) Inventors:
• **YANG, Huiling**
  **Ningde, Fujian 352100 (CN)**

• **GUAN, Yingjie**
  **Ningde, Fujian 352100 (CN)**
• **XU, Yue**
  **Ningde, Fujian 352100 (CN)**
• **ZHAO, Yuzhen**
  **Ningde, Fujian 352100 (CN)**
• **WEN, Yan**
  **Ningde, Fujian 352100 (CN)**
• **HUANG, Qisen**
  **Ningde, Fujian 352100 (CN)**

(74) Representative: **Gong, Jinping**
**CocreateIP**
**Neumarkter Straße 21**
**81673 München (DE)**

(54) **POSITIVE ELECTRODE ACTIVE MATERIAL AND PREPARATION METHOD THEREFOR, POSITIVE ELECTRODE SHEET, SECONDARY BATTERY, BATTERY MODULE, BATTERY PACK, AND ELECTRIC DEVICE**

(57)    A positive electrode active material, a preparation method thereof, a positive electrode plate, a secondary battery, a battery module, a battery pack, and an electric apparatus are provided. The positive electrode active material includes: a polyanion compound, where the polyanion compound has the following general formula:

$$Na_xR_y(PO_4)_z(P_2O_7)_k,$$

where R includes at least one of Mg, Al, Sc, Ti, V, Cr, Mn, Fe, Co, Ni, Cu, Zn, Zr, Nb, Mo, Sn, Hf, Ta, W, and Pb, $1 \leq x \leq 7$, $1 \leq y \leq 4$, $1 \leq z \leq 2$, and $1 \leq k \leq 4$; and a first carbon material and a second carbon material compounded with the polyanion compound, where a crystallinity of the first carbon material is higher than that of the second carbon material.

**5**

FIG. 1

EP 4 636 857 A1

## Description

### TECHNICAL FIELD

This application relates to the field of secondary battery technology, and in particular, to a positive electrode active material, a preparation method thereof, a positive electrode plate, a secondary battery, a battery module, a battery pack, and an electric apparatus.

### BACKGROUND

Sodium batteries, due to abundant reserves, lower costs, and wide operating temperature ranges, have significant application potential in large-scale energy storage.

Polyanion compounds, with excellent structural stability, safety, and suitable voltage platforms, are considered as one of the most promising classes of electrode materials. However, the application of polyanion compounds in sodium secondary batteries still faces issues such as low electronic conductivity, low discharge capacity, and poor cycling performance, which cannot meet the application needs of next-generation electrochemical systems.

### SUMMARY

This application is made in view of the above issues, with an objective of providing a positive electrode active material. The positive electrode active material includes a polyanion compound and two carbon materials on a surface of the polyanion compound. The two carbon materials facilitate a synergistic effect on a surface of polyanions, enhancing the conductivity of the positive electrode active carbon material while improving the processability of a polyanion material.

According to a first aspect of this application, a positive electrode active material is provided. The positive electrode active material includes: a polyanion compound, where the polyanion compound has the following general formula:

$$Na_xR_y(PO_4)_z(P_2O_7)_k,$$

where R includes at least one of Mg, Al, Sc, Ti, V, Cr, Mn, Fe, Co, Ni, Cu, Zn, Zr, Nb, Mo, Sn, Hf, Ta, W, and Pb, $1 \leq x \leq 7$, $1 \leq y \leq 4$, $1 \leq z \leq 2$, and $1 \leq k \leq 4$; and a first carbon material and a second carbon material compounded with the polyanion compound, where a crystallinity of the first carbon material is higher than that of the second carbon material.

The positive electrode active material includes the first carbon material and the second carbon material compounded with the polyanion compound, and the crystallinity of the first carbon material is higher than that of the second carbon material. On one hand, the two carbon materials with different crystallinities can reduce agglomeration and be uniformly distributed in the polyanion compound. On the other hand, the second carbon material with higher crystallinity can enhance the conductivity of the positive electrode active material, improving the coulombic efficiency and cycling performance of a battery. Furthermore, compounding the two carbon materials with different crystallinities helps optimize a particle size of the positive electrode active material, reducing the difficulty of grinding and processing of the positive electrode active material, facilitating the crystal growth of the polyanion compound, and making lattices of the polyanion compound regular, thereby further enhancing the cycling stability of the positive electrode active material.

In any embodiment, an $I_D/I_G$ value of the first carbon material is less than 0.8, and an $I_D/I_G$ value of the second carbon material is greater than 0.8 and less than 1.2, where the $I_D/I_G$ value is a ratio of a peak intensity $I_D$ in a range of 1300 cm$^{-1}$ to 1400 cm$^{-1}$ to a peak intensity $I_G$ in a range of 1580 cm$^{-1}$ to 1620 cm$^{-1}$, as measured by Raman spectroscopy.

The $I_D/I_G$ values of the first carbon material and the second carbon material being in different ranges indicate that the crystallinities of the two carbon materials are different. Compounding the two carbon materials with different crystallinities with the polyanion compound can enhance the conductivity of the positive electrode active material, improving the cycling performance of the battery.

In any embodiment, the first carbon material is distributed in a granular form among primary particles of the polyanion compound.

The first carbon material being distributed in the granular form among the primary particles of the polyanion compound can effectively prevent aggregation of the polyanion compound, enhancing the processability of the positive electrode active material.

In any embodiment, the second carbon material is applied on a surface of the primary particles of the polyanion compound in a form of a carbon film.

The second carbon material being applied on the surface of the primary particles of the polyanion compound in the form of the carbon film can increase a contact area between the carbon material and the polyanion compound, facilitating electron transfer, and helping improve the conductivity of the polyanion compound.

In any embodiment, a median particle size $D_v50$ of the primary particles of the polyanion compound is 0.1 $\mu$m to 2.0 $\mu$m.

Controlling the median particle size $D_v50$ of the primary particles of the polyanion compound to be 0.1 $\mu$m to 2.0 $\mu$m facilitates uniform distribution of the first carbon material and the second carbon material on the surface of the polyanion compound, prevents agglomeration of the polyanion compound, and enhances the crystallinity and conductivity of the positive electrode active material.

In any embodiment, based on a total mass of the positive electrode active material, a mass percentage of the first carbon material is 0.1% to 5%, optionally 0.5% to 2%, and a mass percentage of the second carbon material is 0.1% to 10%, optionally 0.5% to 2%.

Controlling the mass percentages of the first carbon material and the second carbon material within appropriate ranges can prevent a reduction in a specific capacity of the positive electrode active material due to an excessively high carbon content, and prevent poor conductivity of the positive electrode active material due to an excessively low carbon content. The appropriate mass percentage ranges of the first carbon material and the second carbon material can balance production cost, processability, and electrical performance, allowing a battery to have excellent electrical performance and application prospects. Further controlling the mass percentages of the first carbon material and the second carbon material to be 0.5% to 2% facilitates further improvement in the coulombic efficiency and cycling performance of the battery.

In any embodiment, a median particle size $D_v50$ of the positive electrode active material is 1.0 $\mu$m to 10 $\mu$m, optionally 1.5 $\mu$m to 5.0 $\mu$m.

Controlling the particle size of the positive electrode active material within an appropriate range can prevent physical gelation of subsequent slurry due to an excessively small particle size so as not to increase the coating difficulty, and can also prevent a decrease in a compacted density due to an excessively large particle size so as not to reduce the kinetic performance of the positive electrode active material during charge and discharge, thereby balancing processability and electrical performance. Further controlling the median particle size $D_v50$ of the positive electrode active material to be 1.5 $\mu$m to 5.0 $\mu$m facilitates further improvement in the coulombic efficiency and cycling performance of the battery.

In any embodiment, a powder compacted density of the positive electrode active material under a pressure of 400 MPa is 1.5 g/cm$^3$ to 3 g/cm$^3$.

The positive electrode active material provided by this application has a high powder compacted density, allowing for further improvement in the compacted density of an electrode plate, facilitating further optimization of a specific capacity of the positive electrode active material and the energy density of a battery, and allowing a sodium secondary battery to have excellent cycle life and safety during long-term fast charging.

In any embodiment, powder resistance of the positive electrode active material at 25°C is 1 k$\Omega$·cm to 375 k$\Omega$·cm.

The positive electrode active material provided by this application has low powder resistance, allowing a positive electrode plate to have high conductivity, and allowing a sodium secondary battery to have excellent cycle life and safety during long-term fast charging.

According to a second aspect of this application, a preparation method of a positive electrode active material is provided and includes the following step:

mixing and calcining a sodium source, an R source, a phosphorus source, a first carbon source, and a second carbon source to prepare the positive electrode active material, where the positive electrode active material includes:

a polyanion compound, where the polyanion compound has the following general formula:

$$Na_xR_y(PO_4)_z(P_2O_7)_k,$$

where R includes at least one of Mg, Al, Sc, Ti, V, Cr, Mn, Fe, Co, Ni, Cu, Zn, Zr, Nb, Mo, Sn, Hf, Ta, W, and Pb, $1 \leq x \leq 7$, $1 \leq y \leq 4$, $1 \leq z \leq 2$, and $1 \leq k \leq 4$; and
a first carbon material and a second carbon material compounded with the polyanion compound, where a crystallinity of the first carbon material is higher than that of the second carbon material,
where the first carbon material is derived from the first carbon source, and the second carbon material is derived from the second carbon source.

The preparation method of a positive electrode active material is simple and has low production costs. The cosintering of at least two different carbon sources with other raw materials allows the carbon materials to be uniformly distributed among primary particles of the polyanion compound, effectively enhancing the conductivity of the positive electrode active material, and allowing a battery to have excellent coulombic efficiency and cycling performance.

In any embodiment, the first carbon source is an inorganic carbon source, where the inorganic carbon source includes one or more of natural graphite, artificial graphite, carbon black, carbon nanotubes, and graphene.

The inorganic carbon source has high crystallinity and can be distributed in a granular form among the primary particles of the polyanion compound, reducing agglomeration and clumping of the polyanion compound, improving the processability of the positive electrode active material, and effectively enhancing the conductivity of the positive electrode active material while reducing a particle size of the positive electrode active material.

In any embodiment, the second carbon source is an organic carbon source, where the organic carbon source includes one or more of sucrose, glucose, citric acid, starch, cyclodextrin, asphalt, polyethylene glycol, and polyvinyl alcohol.

After calcination, the organic carbon source is applied on a surface of the primary particles of the polyanion compound in a form of a carbon film, increasing a contact area between the carbon material and the polyanion compound, facilitating electron transfer, and helping improve the conductivity of the polyanion compound.

In any embodiment, the mixing and calcining a sodium source, an R source, a phosphorus source, a first carbon source, and a second carbon source to prepare the positive electrode active material specifically includes:

dissolving the sodium source, the R source, and the phosphorus source in a solvent, and grinding to obtain a first mixed slurry;

dispersing the first carbon source and the second carbon source in a solvent to obtain a carbon dispersion; and mixing the first mixed slurry and the carbon dispersion, followed by drying and calcining, to prepare the positive electrode active material.

Grinding the other raw materials first and then adding the carbon sources help quickly grind particles in the first mixed slurry to a desired particle size, avoiding thickening caused by the addition of nanomaterials in the carbon dispersion, and significantly improving production efficiency.

In any embodiment, $D_v50$ of the particles in the first mixed slurry is 0.05 $\mu$m to 1.5 $\mu$m, preferably 0.1 $\mu$m to 0.8 $\mu$m.

Controlling the median particle size of the particles in the first mixed slurry within an appropriate range facilitates the mixing of the carbon dispersion with the first mixed slurry, allowing the first carbon material/the second carbon material to be uniformly compounded with the polyanion compound, improving the processability of the positive electrode active material and the capacity, coulombic efficiency, and cycling performance of a battery.

In any embodiment, the R source includes one or more of a magnesium source, an aluminum source, a scandium source, a titanium source, a vanadium source, a chromium source, a manganese source, an iron source, a cobalt source, a nickel source, a copper source, a zinc source, a zirconium source, a niobium source, a molybdenum source, a tin source, a hafnium source, a tantalum source, a tungsten source, and a lead source.

In any embodiment, the iron source includes one or more of ferrous oxalate, ferrous nitrate, ferrous sulfate, ferrous chloride, ferric oxalate, ferric acetate, ferric oxide, ferrous oxide, and metallic iron.

According to a third aspect of this application, a positive electrode plate is provided and includes a positive electrode film layer, where the positive electrode film layer includes the positive electrode active material according to the first aspect or the positive electrode active material prepared by the preparation method of a positive electrode active material according to the second aspect.

In any embodiment, the positive electrode film layer further includes a one-dimensional conductive material and a zero-dimensional conductive material.

The addition of the one-dimensional conductive material and the zero-dimensional conductive material helps enhance the conductivity of the positive electrode plate.

In any embodiment, the one-dimensional conductive material includes one or more of single-walled carbon nanotubes, multi-walled carbon nanotubes, and few-walled carbon nanotubes. Based on a total mass of the positive electrode film layer, a mass percentage of the one-dimensional conductive material is 0.2% to 1%, optionally 0.5% to 1%.

Controlling the mass percentage of the one-dimensional conductive material within an appropriate range helps reduce the resistance of the electrode plate and improve the capacity, coulombic efficiency, and cycling performance of a battery. Further controlling the mass percentage of the one-dimensional conductive material to be 0.5% to 1% facilitates further improvement in the coulombic efficiency of the battery.

In any embodiment, the zero-dimensional conductive material includes one or more of Super P, Ketjen black, and acetylene black. Based on the total mass of the positive electrode film layer, a mass percentage of the zero-dimensional conductive material is 1% to 3%, optionally 2% to 2.8%.

Controlling the mass percentage of the zero-dimensional conductive material within an appropriate range helps reduce the resistance of the electrode plate and improve the capacity, coulombic efficiency, and cycling performance of the battery. Further controlling the mass percentage of the zero-dimensional conductive material to be 2% to 2.8% facilitates further improvement in the coulombic efficiency of the battery.

In any embodiment, based on the total mass of the positive electrode film layer, a mass percentage of a binder is 1.5% to 3%, optionally 2.0% to 2.5%.

Controlling the mass percentage of the binder within an appropriate range provides sufficient adhesion without causing excessive resistance in the electrode plate, facilitating reduction of the resistance of the electrode plate and improvement in the capacity, coulombic efficiency, and cycling performance of the battery. Further controlling the mass percentage of the binder to be 2.0% to 2.5% facilitates further improvement in the cycling performance of the battery.

In any embodiment, a compacted density of the positive electrode film layer is 1.7 $g/cm^3$ to 2.3 $g/cm^3$.

The positive electrode film layer with the compacted density of 1.7 $g/cm^3$ to 2.3 $g/cm^3$ allows the battery to have higher capacity and energy density.

In any embodiment, electrode plate resistance of the positive electrode plate is 0.1 $\Omega\cdot cm$ to 10 $\Omega\cdot cm$.

The positive electrode plate with the electrode plate resistance of 0.1 $\Omega\cdot cm$ to 10 $\Omega\cdot cm$ has good electron transfer efficiency, facilitating the performance of the battery.

According to a fourth aspect of this application, a secondary battery is provided and includes a negative electrode plate and the positive electrode plate according to the third aspect.

In any embodiment, the secondary battery is an anode-free sodium secondary battery.

In any embodiment, the secondary battery further includes a negative electrode plate, where the negative electrode plate includes a negative electrode current collector and a primer layer disposed on at least one surface of the negative electrode current collector, and the primer layer includes one or more of carbon nanotubes, graphite, graphene, carbon black, aluminum oxide, silver-carbon composite nanoparticles, and tin-carbon composite nanoparticles.

The primer layer not only has excellent conductivity but also facilitates uniform deposition of metal ions on the surface of the current collector, improving the coulombic efficiency and cycling performance of the battery.

In any embodiment, an areal density of the primer layer is 5 $g/m^2$ to 50 $g/m^2$.

The primer layer with the areal density of 5 $g/m^2$ to 50 $g/m^2$ facilitates uniform distribution of nucleation sites in an anode-free secondary battery, facilitating uniform deposition of metal without affecting electron transfer.

In any embodiment, a thickness of the primer layer is 2 $\mu m$ to 100 $\mu m$.

Controlling the thickness of the primer layer to be 2 $\mu m$ to 100 $\mu m$ can provide sufficient nucleation sites for the anode-free secondary battery, facilitating uniform deposition of metal ions and suppressing dendrites.

According to a fifth aspect of this application, an electric apparatus is provided and includes the secondary battery according to the fourth aspect of this application.

**BRIEF DESCRIPTION OF DRAWINGS**

FIG. 1 is a schematic diagram of a secondary battery cell according to an embodiment of this application;
FIG. 2 is an exploded view of the secondary battery cell according to the embodiment of this application shown in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application shown in FIG. 4; and
FIG. 6 is a schematic diagram of an electric apparatus using a secondary battery as a power source according to an embodiment of this application.

Description of reference signs:
1. battery pack; 2. upper box body; 3. lower box body; 4. battery module; 5. secondary battery cell; 51. housing; 52. electrode assembly; and 53. cover plate.

**DESCRIPTION OF EMBODIMENTS**

Embodiments specifically disclosing a positive electrode active material, a preparation method thereof, a secondary battery, and an electric apparatus of this application are described below in detail with appropriate reference to the accompanying drawings. However, unnecessary detailed descriptions may be omitted. For example, detailed descriptions of well-known matters or repetitive descriptions of substantially identical structures may be omitted. This is to avoid unnecessary cumbersomeness of the following descriptions, to facilitate understanding by persons skilled in the art. Additionally, the accompanying drawings and the following descriptions are provided for persons skilled in the art to fully understand this application and are not intended to limit the subject matter described in the claims.

"Ranges" disclosed in this application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combination of real numbers between a and b, where both a and b are real numbers. For example, a value range of "0-5" means that all real numbers in the range of "0-5" are listed herein, and "0-5" is just an abbreviated representation of a combination of these numbers. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all embodiments and optional embodiments of this application can be combined with each other to form new technical solutions.

Unless otherwise stated, all the technical features and optional technical features of this application can be combined with each other to form new technical solutions.

Unless otherwise specified, all steps of this application can be performed sequentially or randomly, preferably sequentially. For example, a method including steps (a) and (b) indicates that the method may include steps (a) and (b) performed sequentially or may include steps (b) and (a) performed sequentially. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, "include" and "contain" may indicate that other components not listed may also be included or contained, or only the listed components may be included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In the prior art, during a production process of a positive electrode active material, carbon coating is typically performed after sintering of the positive electrode active material to improve the conductivity of the positive electrode active material. However, this method has limited effectiveness in improving the conductivity of a polyanion compound and cannot further enhance battery performance.

[Positive electrode active material]

Based on this, this application proposes a positive electrode active material, where the positive electrode active material includes: a polyanion compound, where the polyanion compound has the following general formula:

$$Na_xR_y(PO_4)_z(P_2O_7)_k,$$

where R includes at least one of Mg, Al, Sc, Ti, V, Cr, Mn, Fe, Co, Ni, Cu, Zn, Zr, Nb, Mo, Sn, Hf, Ta, W, and Pb, $1 \leq x \leq 7$, $1 \leq y \leq 4$, $1 \leq z \leq 2$, and $1 \leq k \leq 4$; and
a first carbon material and a second carbon material compounded with the polyanion compound, where a crystallinity of the first carbon material is higher than that of the second carbon material.

In this context, compounding refers to mixing of two-phase materials in any form, including but not limited to coating, particle mixing, and the like.

In some embodiments, R includes Fe. In some embodiments, R includes Al. In some embodiments, R includes V. In some embodiments, R includes Mn.

In some embodiments, x is optionally 1, 1.5, 2, 2.5, 3, 3.5, 4, 0.4, 4.5, 5, 5.5, 6, 6.5, 7, or a value within a range formed by any two of the foregoing points; y is optionally 1, 1.5, 2, 2.5, 3, 3.5, 4, or a value within a range formed by any two of the foregoing points; z is optionally 1, 1.1, 1.2, 1.3, 1.4, 1.5, 1.6, 1.7, 1.8, 1.9, 2, or a value within a range formed by any two of the foregoing points; and k is optionally 1, 1.5, 2, 2.5, 3, 3.5, 4, or a value within a range formed by any two of the foregoing points.

The crystallinity of the carbon material can be measured by any known means including but not limited to Raman spectroscopy and an X-ray diffractometer. As an example, Raman spectroscopy is used to characterize the crystallinity of the carbon material. The Raman spectrum of carbon includes main "resonance" bands in ranges of 1300 $cm^{-1}$ to 1400 $cm^{-1}$ (approximately 1340 $cm^{-1}$) and 1580 $cm^{-1}$ to 1620 $cm^{-1}$, denoted as "D" and "G" bands, respectively. The D band is generally attributed to disordered carbon defects, and the G band is attributed to graphitic or "ordered" $sp^2$ carbon. Therefore, a ratio of a peak intensity $I_D$ in the range of 1300 $cm^{-1}$ to 1400 $cm^{-1}$ to a peak intensity $I_G$ in the range of 1580 $cm^{-1}$ to 1620 $cm^{-1}$, as measured by Raman spectroscopy, is commonly used to characterize the disorder/crystallinity of the carbon material. Thus, an $I_D/I_G$ value of the first carbon material is less than an $I_D/I_G$ value of the second carbon material.

It can be understood that the first carbon material and the second carbon material can be compounded with the polyanion compound by any means such as coating or mixing.

The positive electrode active material includes the first carbon material and the second carbon material compounded with the polyanion compound, and the crystallinity of the first carbon material is higher than that of the second carbon material. On one hand, the two carbon materials with different crystallinities can reduce agglomeration and be uniformly distributed in the polyanion compound. On the other hand, the second carbon material with higher crystallinity can enhance the conductivity of the positive electrode active material, improving the coulombic efficiency and cycling performance of a battery. Furthermore, compounding the two carbon materials with different crystallinities facilitates the crystal growth of the polyanion compound, making lattices of the polyanion compound regular, thereby further enhancing the cycling stability of the positive electrode active material.

In some embodiments, an $I_D/I_G$ value of the first carbon material is less than 0.8, and an $I_D/I_G$ value of the second carbon material is greater than 0.8 and less than 1.2, where the $I_D/I_G$ value is a ratio of a peak intensity $I_D$ in a range of 1300 cm$^{-1}$ to 1400 cm$^{-1}$ to a peak intensity $I_G$ in a range of 1580 cm$^{-1}$ to 1620 cm$^{-1}$, as measured by Raman spectroscopy.

When the $I_D/I_G$ value is less than 0.8, the carbon material has a certain degree of graphitization. When the $I_D/I_G$ value is greater than 0.8, the carbon material is predominantly amorphous carbon. In some embodiments, the first carbon material includes one or more of natural graphite powder, artificial graphite powder, carbon black, carbon nanotubes, and graphene; and the second carbon material includes amorphous carbon.

In some embodiments, the $I_D/I_G$ value of the first carbon material is optionally 0.1, 0.2, 0.3, 0.4, 0.5, 0.6, 0.7, 0.75, or a value within a range formed by any two of the foregoing points. The $I_D/I_G$ value of the second carbon material is optionally 0.82, 0.85, 0.87, 0.9, 0.93, 0.95, 0.98, 1.0, 1.05, 1.1, 1.15, or a value within a range formed by any two of the foregoing points.

The $I_D/I_G$ values of the first carbon material and the second carbon material being in different ranges indicate that the crystallinities of the two carbon materials are different. Compounding the two carbon materials with different crystallinities with the polyanion compound can enhance the conductivity of the positive electrode active material, improving the cycling performance of the battery.

In some embodiments, the first carbon material is distributed in a granular form among primary particles of the polyanion compound.

In this context, the term "primary particle" refers to particles of the polyanion compound before agglomeration.

In some embodiments, a median particle size $D_v50$ of the primary particles of the polyanion compound is 0.1 μm to 2.0 μm. In some embodiments, the median particle size of the primary particles of the polyanion compound is optionally 0.1 μm, 0.2 μm, 0.4 μm, 0.5 μm, 0.6 μm, 0.8 μm, 1.0 μm, 1.2 μm, 1.4 μm, 1.5 μm, 1.6 μm, 1.8 μm, 2.0 μm, or a value within a range formed by any two of the foregoing points.

The median particle size of the primary particles of the polyanion compound is 0.1 μm to 2.0 μm, so that the distribution of the first carbon material among the primary particles of the polyanion compound allows for better enhancement of the conductivity of the positive electrode active material compared to simple physical mixing of the first carbon material with secondary particles of the polyanion compound.

In this context, the term "secondary particle" refers to particles formed by the agglomeration of primary particles of the polyanion compound.

In some embodiments, the second carbon material is applied on a surface of the primary particles of the polyanion compound in a form of a carbon film.

The second carbon material being applied on the surface of the primary particles of the polyanion compound in the form of the carbon film can increase a contact area between the carbon material and the polyanion compound, facilitating electron transfer, and helping improve the conductivity of the polyanion compound.

In some embodiments, the second carbon material is applied on the surface of the primary particles of the polyanion compound in the form of a carbon film, and the first carbon material is distributed in a granular form among the primary particles of the polyanion compound coated with the second carbon material.

The second carbon material and the first carbon material are compounded with the polyanion compound in different forms, improving the conductivity of the positive electrode active material through mutual coordination of points and surfaces. Additionally, the second carbon material is predominantly amorphous carbon, and applying the second carbon material to the surface of the polyanion compound easily leads to agglomeration of the polyanion compound, making it difficult to effectively reduce a particle size. The first carbon material has higher crystallinity, and the distribution of the first carbon material among the primary particles of the polyanion compound coated with the second carbon material can effectively reduce adhesion of the second carbon material, reducing a median particle size of the positive electrode active material.

In some embodiments, based on a total mass of the positive electrode active material, a mass percentage of the first carbon material is 0.1% to 5%, optionally 0.5% to 2%, and a mass percentage of the second carbon material is 0.1% to 10%, optionally 0.5% to 2%.

In some embodiments, based on the total mass of the positive electrode active material, the mass percentage of the first carbon material is optionally 0.1%, 0.5%, 1%, 1.5%, 2%, 2.5%, 3%, 3.5%, 4%, 4.5%, 5%, or a value within a range formed by any two of the foregoing points. The mass percentage of the second carbon material is optionally 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a value within a range formed by any two of the foregoing points.

Controlling the mass percentages of the first carbon material and the second carbon material within appropriate ranges can prevent a reduction in a specific capacity of the positive electrode active material due to an excessively high carbon content, and prevent poor conductivity of the positive electrode active material due to an excessively low carbon content. The appropriate mass percentage ranges of the first carbon material and the second carbon material can balance production cost, processability, and electrical performance, allowing a battery to have excellent electrical performance and application prospects. Further controlling the mass percentages of the first carbon material and the second carbon material to be 0.5% to 2% facilitates further reduction in electrode plate resistance, improving the capacity, coulombic efficiency, and cycling performance of the battery.

In some embodiments, a median particle size $D_v50$ of the positive electrode active material is 1.0 $\mu$m to 10 $\mu$m, optionally 1.5 $\mu$m to 5.0 $\mu$m.

In some embodiments, the median particle size $D_v50$ of the positive electrode active material is optionally 1.0 $\mu$m, 1.5 $\mu$m, 2.0 $\mu$m, 2.5 $\mu$m, 3.0 $\mu$m, 3.5 $\mu$m, 4.0 $\mu$m, 4.5 $\mu$m, 50 $\mu$m, 5.5 $\mu$m, 6.0 $\mu$m, 6.5 $\mu$m, 7.0 $\mu$m, 7.5 $\mu$m, 8.0 $\mu$m, 8.5 $\mu$m, 9.0 $\mu$m, 9.5 $\mu$m, 10 $\mu$m, or a value within a range formed by any two of the foregoing points.

The median particle size $D_v50$ of the positive electrode active material can be tested by any known means in the art. As an example, in accordance with GB/T 19077-2016 Particle Size Distribution Laser Diffraction Method, 0.1 g to 0.13 g of a positive electrode active material sample under test is weighed using a 50 mL beaker, 5 g of anhydrous ethanol is added, a stirrer with a diameter of approximately 2.5 mm is placed, and sealing is performed using a preservative film. After ultrasonic treatment for 5 min, the sample is transferred to a magnetic stirrer and stirred at 500 rpm for more than 20 min, and two samples are taken from each batch of products for testing. The testing is performed using a Mastersizer 2000E laser particle size analyzer from Malvern Instruments Ltd., UK.

Controlling the particle size of the positive electrode active material within an appropriate range can prevent physical gelation of subsequent slurry due to an excessively small particle size so as not to increase the coating difficulty, and can also prevent a decrease in a compacted density due to an excessively large particle size so as not to reduce the kinetic performance of the positive electrode active material during charge and discharge, thereby balancing processability and electrical performance. Further controlling the median particle size $D_v50$ of the positive electrode active material to be 1.5 $\mu$m to 5.0 $\mu$m facilitates further reduction in the electrode plate resistance, improving the capacity, coulombic efficiency, and cycling performance of the battery.

In some embodiments, a powder compacted density of the positive electrode active material under a pressure of 400 MPa is 1.5 g/cm$^3$ to 3 g/cm$^3$. In some embodiments, the powder compacted density of the positive electrode active material under a pressure of 400 MPa is optionally 1.5 g/cm$^3$, 1.7 g/cm$^3$, 2.0 g/cm$^3$, 2.2 g/cm$^3$, 2.4 g/cm$^3$, 2.5 g/cm$^3$, 2.6 g/cm$^3$, 2.8 g/cm$^3$, 3 g/cm$^3$, or a value within a range formed by any two of the foregoing points.

The powder compacted density of the positive electrode active material under a pressure of 400 MPa can be tested by any known means in the art. As an example, in accordance with GB/T 24533-2009 Powder Compacted Density Method: During compression under an external force, as the powder moves and deforms, voids are filled, a contact area between particles increases, attractive forces between atoms are generated, and mechanical fit between particles is enhanced, thereby forming a compact with a certain density. In a formula: $pC=m/V=m/(S \times H)$, pC is a powder compacted density in g/cm; m is a sample mass in g; S is a mold base area in 1.327 cm$^2$; and H is a compacted thickness in cm. Specifically, a certain amount of powder sample under test is placed in a dedicated compaction mold, the mold is placed on a compacted density instrument, different pressures are set, and a thickness of the powder under a pressure of 400 MPa (a thickness after pressure release) can be read on the equipment. The compacted density is calculated using $\rho = m/v$.

The positive electrode active material provided by this application has a high compacted density, facilitating further improvement in the specific capacity of the positive electrode active material and the energy density of the battery.

In some embodiments, powder resistance of the positive electrode active material at 25°C is 1 k$\Omega$·cm to 375 k$\Omega$·cm. In some embodiments, the powder resistance of the positive electrode active material at 25°C is optionally 1 k$\Omega$·cm, 5 k$\Omega$·cm, 10 k$\Omega$·cm, 50 k$\Omega$·cm, 100 k$\Omega$·cm, 150 k$\Omega$·cm, 200 k$\Omega$·cm, 250 k$\Omega$·cm, 300 k$\Omega$·cm, 350 k$\Omega$·cm, 370 k$\Omega$·cm, 375 k$\Omega$·cm, or a value within a range formed by any two of the foregoing points.

The powder resistance of the positive electrode active material at 25°C can be tested by any known means in the art. As an example, a powder resistivity testing instrument is PRCD1100 from Initial Energy Science & Technology Co., Ltd., with a pressure range of 10 MPa to 400 MPa and a punch size of 78.54 mm$^2$. A certain amount of powder is placed in a dedicated compaction mold, the mold is then placed on a compacted density instrument, different pressures are set, and powder resistivities under different pressures can be read on the equipment.

The positive electrode active material provided by this application has a low powder resistance, facilitating the performance of the battery.

This application further provides a preparation method of a positive electrode active material, including the following step:

mixing and calcining a sodium source, an R source, a phosphorus source, a first carbon source, and a second carbon source to prepare a positive electrode active material, where the positive electrode active material includes:

a polyanion compound, where the polyanion compound has the following general formula:

$$Na_xR_y(PO_4)_z(P_2O_7)_k,$$

where R includes at least one of Mg, Al, Sc, Ti, V, Cr, Mn, Fe, Co, Ni, Cu, Zn, Zr, Nb, Mo, Sn, Hf, Ta, W, and Pb, $1 \leq x \leq 7$, $1 \leq y \leq 4$, $1 \leq z \leq 2$, and $1 \leq k \leq 4$; and
a first carbon material and a second carbon material compounded with the polyanion compound, where a crystallinity of the first carbon material is higher than that of the second carbon material;
where the first carbon material is derived from the first carbon source, and the second carbon material is derived from the second carbon source.

In some embodiments, R includes Fe. In some embodiments, R includesAl. In some embodiments, R includes V. In some embodiments, R includes Mn.

In some embodiments, x is optionally 1, 1.5, 2, 2.5, 3, 3.5, 4, 0.4, 4.5, 5, 5.5, 6, 6.5, 7, or a value within a range formed by any two of the foregoing points; y is optionally 1, 1.5, 2, 2.5, 3, 3.5, 4, or a value within a range formed by any two of the foregoing points; z is optionally 1, 1.1, 1.2, 1.3, 1.4, 1.5, 1.6, 1.7, 1.8, 1.9, 2, or a value within a range formed by any two of the foregoing points; and k is optionally 1, 1.5, 2, 2.5, 3, 3.5, 4, or a value within a range formed by any two of the foregoing points.

In some embodiments, the calcining includes two stages: low-temperature calcining and high-temperature calcining. A temperature is raised to a calcining temperature at a velocity of 0.1°C/min to 10°C/min. The low-temperature calcining is performed at a temperature of 300°C to 350°C, with a duration of 2 h to 8 h. The high-temperature calcining is performed at a temperature of 450°C to 700°C, with a duration of 2 h to 15 h.

In some embodiments, the velocity of raising the temperature to the calcining temperature is optionally 0.1°C/min, 1°C/min, 2°C/min, 3°C/min, 4°C/min, 5°C/min, 6°C/min, 7°C/min, 8°C/min, 9°C/min, 10°C/min, or a value within a range formed by any two of the foregoing points. During the low-temperature calcining, the temperature is optionally 300°C, 305°C, 310°C, 315°C, 320°C, 325°C, 330°C, 335°C, 340°C, 345°C, 350°C, or a value within a range formed by any two of the foregoing points, and the duration is 2 h, 2.5 h, 3 h, 3.5 h, 4 h, 4.5 h, 5 h, 5.5 h, 6 h, 6.5 h, 7 h, 7.5 h, 8 h, or a value within a range formed by any two of the foregoing points. During the high-temperature calcining, the temperature is optionally 450°C, 500°C, 550°C, 600°C, 650°C, 700°C, or a value within a range formed by any two of the foregoing points, and the duration is 2 h, 3 h, 4 h, 5 h, 6 h, 7 h, 8 h, 9 h, 10 h, 11 h, 12 h, 13 h, 14 h, 15 h, or a value within a range formed by any two of the foregoing points.

The positive electrode active material provided by this application has a low sintering temperature, and the second carbon material is not fully carbonized. The compounding of the first carbon material achieves simultaneous optimization of conductivity, processability, and particle size, allowing a sodium secondary battery to have excellent cycle life and safety during long-term fast charging.

The preparation method of a positive electrode active material is simple and has low production costs. The cosintering of at least two different carbon sources with other raw materials allows the carbon materials to be uniformly distributed among primary particles of the polyanion compound, effectively enhancing the conductivity of the positive electrode active material, and allowing a battery to have excellent coulombic efficiency and cycling performance.

In some embodiments, the first carbon source is an inorganic carbon source, where the inorganic carbon source includes one or more of natural graphite, artificial graphite, carbon black, carbon nanotubes, and graphene.

The inorganic carbon source has high crystallinity and can be distributed in a granular form among the primary particles of the polyanion compound, reducing agglomeration and clumping of the polyanion compound, improving the processability of the positive electrode active material, and effectively enhancing the conductivity of the positive electrode active material while reducing a particle size of the positive electrode active material.

In some embodiments, the organic carbon source includes one or more of sucrose, glucose, citric acid, starch, cyclodextrin, asphalt, polyethylene glycol, and polyvinyl alcohol.

After calcination, the organic carbon source is applied on a surface of the primary particles of the polyanion compound in a form of a carbon film, increasing a contact area between the carbon material and the polyanion compound, facilitating electron transfer, and helping improve the conductivity of the polyanion compound.

In some embodiments, the mixing and calcining a sodium source, an R source, a phosphorus source, a first carbon source, and a second carbon source to prepare the positive electrode active material specifically includes:

dissolving the sodium source, the R source, and the phosphorus source in a solvent, and grinding to obtain a first mixed slurry,

dispersing the first carbon source and the second carbon source in a solvent to obtain a carbon dispersion; and

mixing the first mixed slurry and the carbon dispersion, followed by drying and calcining, to prepare the positive electrode active material.

In some embodiments, the carbon dispersion includes at least one first carbon source. In some embodiments, the carbon dispersion includes at least one second carbon source. In some embodiments, the second carbon source can disperse the first carbon source, further improving the dispersibility of the dispersion, thereby enhancing the dispersion of the carbon material in the polyanion compound. In some embodiments, the second carbon source includes at least one of polyethylene glycol and polyvinyl alcohol.

Grinding the other raw materials first and then adding the carbon sources help quickly grind particles in the first mixed slurry to a desired particle size, avoiding thickening caused by the addition of nanomaterials in the carbon dispersion, and significantly improving production efficiency.

In some embodiments, $D_v50$ of the particles in the first mixed slurry is 0.05 $\mu$m to 1.5 $\mu$m, preferably 0.1 $\mu$m to 0.8 $\mu$m.

In some embodiments, $D_v50$ of the particles in the first mixed slurry is optionally 0.05 $\mu$m, 0.1 $\mu$m, 0.2 $\mu$m, 0.3 $\mu$m, 0.4 $\mu$m, 0.5 $\mu$m, 0.6 $\mu$m, 0.7 $\mu$m, 0.8 $\mu$m, 0.9 $\mu$m, 1.0 $\mu$m, 1.1 $\mu$m, 1.2 $\mu$m, 1.3 $\mu$m, 1.4 $\mu$m, 1.5 $\mu$m, or a value within a range formed by any two of the foregoing points.

$D_v50$ of the particles in the first mixed slurry can be tested by any known means in the art. As an example, the median particle size is tested using a centrifugal sedimentation method and a laser particle size analyzer. A sample is first centrifuged, sedimented, and filtered to obtain a particle sample from an initial mixed slurry. Then, 0.1 g to 0.13 g of the particle sample under test is weighed using a 50 mL beaker, 5 g of acetone is added, a stirrer with a diameter of approximately 2.5 mm is placed, and sealing is performed using a preservative film. After ultrasonic treatment for 5 min, the sample is transferred to a magnetic stirrer and stirred at 500 rpm for more than 20 min, and two samples are taken from each batch of products for testing. The testing is performed using a Mastersizer 2000E laser particle size analyzer from Malvern Instruments Ltd., UK.

Controlling the median particle size of the particles in the first mixed slurry within an appropriate range facilitates the mixing of the carbon dispersion with the first mixed slurry, allowing the first carbon material/the second carbon material to be uniformly compounded with the polyanion compound, improving the processability of the positive electrode active material and the capacity, coulombic efficiency, and cycling performance of a battery.

In some embodiments, the R source includes one or more of a magnesium source, an aluminum source, a scandium source, a titanium source, a vanadium source, a chromium source, a manganese source, an iron source, a cobalt source, a nickel source, a copper source, a zinc source, a zirconium source, a niobium source, a molybdenum source, a tin source, a hafnium source, a tantalum source, a tungsten source, and a lead source.

In some embodiments, the iron source includes one or more of ferrous oxalate, ferric nitrate, ferrous nitrate, ferrous sulfate, ferrous chloride, ferric oxalate, ferric acetate, ferric oxide, ferrous oxide, and metallic iron.

In some embodiments, the calcining after mixing the first mixed slurry and the carbon dispersion includes two stages: low-temperature calcining and high-temperature calcining. A temperature is raised to a calcining temperature at a velocity of 0.1°C/min to 10°C/min. The low-temperature calcining is performed at a temperature of 300°C to 350°C, with a duration of 2 h to 8 h. The high-temperature calcining is performed at a temperature of 450°C to 700°C, with a duration of 2 h to 15 h.

In some embodiments, the velocity of raising the temperature to the calcining temperature is optionally 0.1°C/min, 1°C/min, 2°C/min, 3°C/min, 4°C/min, 5°C/min, 6°C/min, 7°C/min, 8°C/min, 9°C/min, 10°C/min, or a value within a range formed by any two of the foregoing points. During the low-temperature calcining, the temperature is optionally 300°C, 305°C, 310°C, 315°C, 320°C, 325°C, 330°C, 335°C, 340°C, 345°C, 350°C, or a value within a range formed by any two of the foregoing points, and the duration is 2 h, 2.5 h, 3 h, 3.5 h, 4h, 4.5 h, 5 h, 5.5 h, 6 h, 6.5 h, 7 h, 7.5 h, 8 h, or a value within a range formed by any two of the foregoing points. During the high-temperature calcining, the temperature is optionally 450°C, 500°C, 550°C, 600°C, 650°C, 700°C, or a value within a range formed by any two of the foregoing points, and the duration is 2 h, 3 h, 4 h, 5 h, 6 h, 7 h, 8 h, 9 h, 10 h, 11 h, 12 h, 13 h, 14 h, 15 h, or a value within a range formed by any two of the foregoing points.

[Positive electrode plate]

According to a third aspect of this application, a positive electrode plate is provided and includes a positive electrode film layer, where the positive electrode film layer includes the positive electrode active material according to some embodiments or a positive electrode active material prepared by the preparation method of a positive electrode active material according to some embodiments.

In some embodiments, the positive electrode film layer further includes at least one of a one-dimensional conductive material and a zero-dimensional conductive material.

In some embodiments, the positive electrode film layer includes both the one-dimensional conductive material and the zero-dimensional conductive material. The simultaneous addition of conductive materials in two forms helps further enhance the conductivity of the positive electrode plate.

In some embodiments, the one-dimensional conductive material includes one or more of single-walled carbon nanotubes, multi-walled carbon nanotubes, and few-walled carbon nanotubes. Based on a total mass of the positive electrode film layer, a mass percentage of the one-dimensional conductive material is 0.2% to 1%, optionally 0.5% to 1%.

In this context, the term "few-walled carbon nanotubes" refers to a mixture including single-walled carbon nanotubes, double-walled carbon nanotubes, and triple-walled carbon nanotubes.

In some embodiments, the one-dimensional conductive material includes single-walled carbon nanotubes. In some embodiments, the one-dimensional conductive material includes multi-walled carbon nanotubes. In some embodiments, the one-dimensional conductive material includes single-walled carbon nanotubes and multi-walled carbon nanotubes. In some embodiments, the one-dimensional conductive material includes single-walled carbon nanotubes, multi-walled carbon nanotubes, and few-walled carbon nanotubes.

In some embodiments, based on the total mass of the positive electrode film layer, the mass percentage of the one-dimensional conductive material is optionally 0.2%, 0.3%, 0.4%, 0.5%, 0.6%, 0.7%, 0.8%, 0.9%, 1%, or a value within a range formed by any two of the foregoing points.

Controlling the mass percentage of the one-dimensional conductive material within an appropriate range helps reduce the resistance of the electrode plate and improve the capacity, coulombic efficiency, and cycling performance of a battery. Further controlling the mass percentage of the one-dimensional conductive material to be 0.5% to 1% facilitates further improvement in the coulombic efficiency of the battery.

In some embodiments, the zero-dimensional conductive material includes one or more of Super P, Ketjen black, and acetylene black. Based on the total mass of the positive electrode film layer, a mass percentage of the zero-dimensional conductive material is 1% to 3%, optionally 2% to 2.8%.

In some embodiments, the zero-dimensional conductive material includes Super P. In some embodiments, the zero-dimensional conductive material includes Ketjen black. In some embodiments, the zero-dimensional conductive material includes Super P and Ketjen black.

In some embodiments, based on the total mass of the positive electrode film layer, the mass percentage of the zero-dimensional conductive material is optionally 1%, 1.2%, 1.5%, 1.7%, 2%, 2.2%, 2.5%, 2.7%, 3%, or a value within a range formed by any two of the foregoing points.

Controlling the mass percentage of the zero-dimensional conductive material within an appropriate range helps reduce the resistance of the electrode plate and improve the capacity, coulombic efficiency, and cycling performance of the battery. Further controlling the mass percentage of the zero-dimensional conductive material to be 2% to 2.8% facilitates further improvement in the coulombic efficiency of the battery.

In some embodiments, based on the total mass of the positive electrode film layer, a mass percentage of a binder is 1.5% to 3%, optionally 2.0% to 2.5%.

In some embodiments, based on the total mass of the positive electrode film layer, the mass percentage of the binder is optionally 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3%, or a value within a range formed by any two of the foregoing points.

Controlling the mass percentage of the binder within an appropriate range provides sufficient adhesion without causing excessive resistance in the electrode plate, facilitating reduction of the resistance of the electrode plate and improvement in the capacity, coulombic efficiency, and cycling performance of the battery. Further controlling the mass percentage of the binder to be 2.0% to 2.5% facilitates further improvement in the cycling performance of the battery.

In some embodiments, a compacted density of the positive electrode film layer is 1.7 g/cm$^3$ to 2.3 g/cm$^3$.

In some embodiments, the compacted density of the positive electrode film layer is optionally 1.7 g/cm$^3$, 1.8 g/cm$^3$, 1.9 g/cm$^3$, 2.0 g/cm$^3$, 2.1 g/cm$^3$, 2.2 g/cm$^3$, 2.3 g/cm$^3$, or a value within a range formed by any two of the foregoing points.

The compacted density of the positive electrode film layer can be tested by any known means in the art. As an example, according to an embodiment of this application, the compacted density PD of the positive electrode film layer is determined by measuring a mass per unit area (g/cm$^2$) of a positive electrode active material layer and a thickness (cm) of the positive electrode active material layer (with more than 14 collection points). The compacted density PD of the positive electrode plate is equal to the mass per unit area (g/cm$^2$) of the positive electrode plate/the thickness (cm) of the negative electrode plate.

The positive electrode film layer with the compacted density of 1.7 g/cm$^3$ to 2.3 g/cm$^3$ allows the battery to have higher capacity and energy density.

In some embodiments, electrode plate resistance of the positive electrode plate is 0.1 Ω·cm to 10 Ω·cm.

In some embodiments, the electrode plate resistance of the positive electrode plate is optionally 0.1 Ω·cm, 0.5 Ω·cm, 1.0 Ω·cm, 1.5 Ω·cm, 2 Ω·cm, 2.5 Ω·cm, 3 Ω·cm, 3.5 Ω·cm, 4 Ω·cm, 4.5 Ω·cm, 5 Ω·cm, 5.5 Ω·cm, 6 Ω·cm, 6.5 Ω·cm, 7 Ω·cm, 7.5 Ω·cm, 8 Ω·cm, 8.5 Ω·cm, 9 Ω·cm, 9.5 Ω·cm, 10 Ω·cm, or a value within a range formed by any two of the foregoing points.

In this context, the electrode plate resistance is mainly used to characterize the resistance of the positive electrode plate, reflecting the electronic conductivity of the positive electrode plate, and can be tested by any known method.

The electrode plate resistance of the positive electrode plate can be tested by any known means in the art. As an example, the dried positive electrode film layer is cut from the left, middle, and right of the positive electrode plate into small discs with a diameter of 3 mm. The power of an electrode plate resistance tester from Initial Energy Science & Technology Co., Ltd. is turned on, the disc is placed at an appropriate position of a probe of the electrode plate resistance tester, the "Start" button is clicked, and the reading is taken once the reading is stable. Two positions of each small disc are tested, and the average of the six measurements is calculated as the electrode plate resistance of the electrode plate.

The positive electrode plate with the electrode plate resistance of $0.1\,\Omega\cdot cm$ to $10\,\Omega\cdot cm$ has good electron transfer efficiency, facilitating the performance of the battery.

In some embodiments, the positive electrode plate further includes a positive electrode current collector, where the positive electrode current collector may be a conductive carbon sheet, a metal foil, a carbon-coated metal foil, a porous metal plate, or a composite current collector. A conductive carbon material of the conductive carbon sheet may be selected from one or more of Super P, carbon black, Ketjen black, carbon dots, carbon nanotubes, graphite, graphene, and carbon nanofiber; metal materials of the metal foil, the carbon-coated metal foil, and the porous metal plate are each independently selected from at least one of copper, aluminum, nickel, and stainless steel; and the composite current collector may be a composite current collector formed by compounding a metal foil with a polymer base film.

In some embodiments, the positive electrode plate may be prepared in the following method: dispersing the components used to prepare the positive electrode plate, such as the positive electrode active material, conductive agent, binder, and any other components, in a solvent (for example, N-methylpyrrolidone) to form a positive electrode slurry; and applying the positive electrode slurry on a positive electrode current collector, and performing processes such as drying and cold pressing to obtain the positive electrode plate.

[Negative electrode plate]

The negative electrode plate may include only a negative electrode current collector without a negative electrode active material. The negative electrode plate may also have a metal phase pre-deposited on the negative electrode current collector.

In some embodiments, the negative electrode current collector may be a metal foil or a composite current collector. For example, as a metal foil, an aluminum foil or a copper foil may be used. The composite current collector may include a polymer substrate and a metal layer formed on at least one surface of the polymer substrate. The composite current collector may be formed by forming a metal material (for example, copper, copper alloy, nickel, nickel alloy, titanium, titanium alloy, silver, or silver alloy) on a polymer substrate (for example, a substrate of polypropylene (PP), polyethylene terephthalate (PET), polybutylene terephthalate (PBT), polystyrene (PS), polyethylene (PE), or the like).

In some embodiments, the negative electrode plate includes a negative electrode current collector and a primer layer disposed on at least one surface of the negative electrode current collector, where the primer layer includes one or more of carbon nanotubes, graphite, graphene, carbon black, aluminum oxide, silver-carbon composite nanoparticles, and tin-carbon composite nanoparticles.

The primer layer not only has excellent conductivity but also facilitates uniform deposition of metal ions on the surface of the current collector, improving the cycling performance and safety of a battery.

In some embodiments, an areal density of the primer layer is 5 g/m$^2$ to 50 g/m$^2$.

In some embodiments, the areal density of the primer layer is optionally 5 g/m$^2$, 10 g/m$^2$, 15 g/m$^2$, 20 g/m$^2$, 25 g/m$^2$, 30 g/m$^2$, 35 g/m$^2$, 40 g/m$^2$, 45 g/m$^2$, 50 g/m$^2$, or a value within a range formed by any two of the foregoing points.

The primer layer with the areal density of 5 g/m$^2$ to 50 g/m$^2$ facilitates uniform distribution of nucleation sites, facilitating uniform deposition of metal without affecting electron transfer.

In some embodiments, a thickness of the primer layer is 2 $\mu$m to 100 $\mu$m.

In some embodiments, the thickness of the primer layer is optionally 2 $\mu$m, 5 $\mu$m, 10 $\mu$m, 15 $\mu$m, 20 $\mu$m, 25 $\mu$m, 30 $\mu$m, 35 $\mu$m, 40 $\mu$m, 45 $\mu$m, 50 $\mu$m, 55 $\mu$m, 60 $\mu$m, 65 $\mu$m, 70 $\mu$m, 75 $\mu$m, 80 $\mu$m, 85 $\mu$m, 90 $\mu$m, 95 $\mu$m, 100 $\mu$m, or a value within a range formed by any two of the foregoing points.

Controlling the thickness of the primer layer to be 2 $\mu$m to 100 $\mu$m can provide sufficient nucleation sites, facilitating uniform deposition of metal ions and suppressing dendrites.

[Separator]

In some embodiments, the secondary battery further includes a separator. This application has no particular limitation on the type of separator, and any known porous separator with good chemical and mechanical stability may be used.

In some embodiments, a material of the separator may be selected from at least one of polyethylene, polypropylene, polyvinylidene fluoride, aramid fiber, polyethylene terephthalate, polytetrafluoroethylene, polyacrylonitrile, polyimide, polyamide, polyester, and natural fiber. The separator may be a single-layer film or a multilayer composite film, which is not particularly limited. When the separator is a multilayer composite film, materials of layers may be the same or different, which are not particularly limited.

In some embodiments, the positive electrode plate, the negative electrode plate, and the separator may be made into an electrode assembly through winding or lamination.

In some embodiments, the secondary battery may include an outer package. The outer package may be used to package the electrode assembly and an electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

[Secondary battery]

The secondary battery may include various forms, for example, including but not limited to a battery cell, a battery module, and a battery pack.

The battery cell includes a positive electrode plate, where the positive electrode plate includes the positive electrode active material according to some embodiments or a positive electrode active material prepared by the preparation method according to some embodiments.

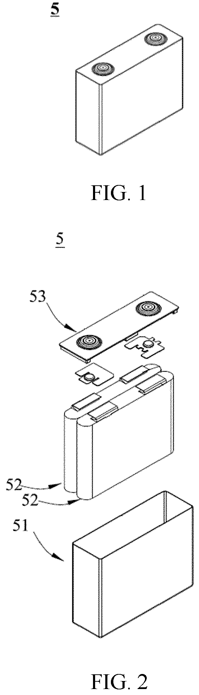

The shape of the battery cell is not particularly limited in this application and may be cylindrical, rectangular, or of any other shapes. For example, FIG. 1 shows a battery cell 5 with a rectangular structure as an example, and FIG. 2 is an exploded view of the battery cell 5.

In some embodiments, the secondary battery cell further includes a negative electrode plate, a separator, and an electrolyte.

In some embodiments, the secondary battery cell is an anode-free sodium secondary battery.

The anode-free sodium secondary battery does not have a pre-deposited negative electrode active material and includes only a negative electrode current collector. During an initial charge, sodium ions receive electrons on a negative electrode side and deposit as metallic sodium on a surface of the current collector to form a metallic sodium phase. During discharge, the metallic sodium can be converted back to sodium ions and return to a positive electrode, allowing for a charge and discharge cycle. Compared to other sodium secondary batteries, the anode-free sodium secondary battery not limited by a negative electrode material can achieve a higher energy density. Moreover, the high electrochemical performance of the battery is maintained, the production cycle of the battery can be shortened, the production costs of the battery can be reduced, and the production efficiency is significantly improved.

In some embodiments, a CB value of the anode-free sodium secondary battery is less than or equal to 0.1.

The CB value is a capacity per unit area of the negative electrode plate divided by a capacity per unit area of the positive electrode plate in the secondary battery. Since an anode-free battery does not include a negative electrode active material, the capacity per unit area of the negative electrode plate is small, resulting in the CB value of the secondary battery being less than or equal to 0.1.

In some embodiments, referring to FIG. 2, an outer package may include a housing 51 and a cover plate 53. The housing 51 may include a bottom plate and side plates connected to the bottom plate, where the bottom plate and the side plates enclose an accommodating cavity. The housing 51 has an opening communicating with the accommodating cavity, and the cover plate 53 can cover the opening to seal the accommodating cavity. A positive electrode plate, a negative electrode plate, and a separator may be formed into an electrode assembly 52 through winding or lamination. The electrode assembly 52 is sealed in the accommodating cavity. The secondary battery 5 may include one or more electrode assemblies 52, and persons skilled in the art may make choices based on actual requirements.

[Battery module]

In some embodiments, a battery cell may be assembled into a battery module, and the battery module may include one or more battery cells. The specific quantity may be chosen by persons skilled in the art according to the use and capacity of the battery module.

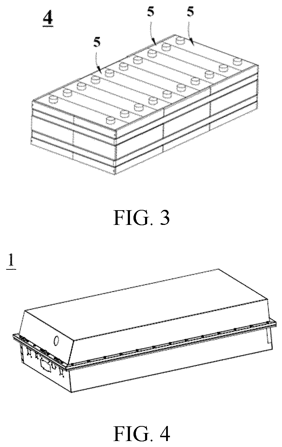

FIG. 3 shows a battery module 4 as an example. Referring to FIG. 3, in the battery module 4, a plurality of battery cells 5 may be sequentially arranged along a length direction of the battery module 4. Certainly, the battery cells 5 may alternatively be arranged in any other manners. Further, the plurality of battery cells 5 may be fastened through fasteners.

Optionally, the battery module 4 may further include a shell with an accommodating space, where the plurality of battery cells 5 are accommodated in the accommodating space.

[Battery pack]

In some embodiments, the above battery module may be further assembled into a battery pack, and the battery pack may include one or more battery modules. The specific quantity may be chosen by persons skilled in the art based on use and capacity of the battery pack.

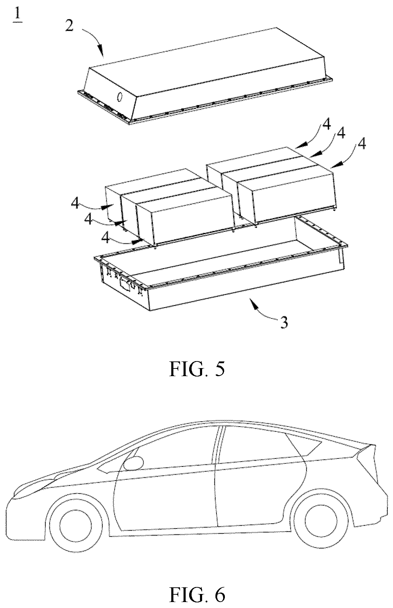

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box body 2 and a lower box body 3, where the upper box body 2 can be engaged with the lower box body 3 to form a sealed space for accommodating the battery modules 4. The plurality of battery modules 4 may be arranged in the battery box in any manner.

[Electric apparatus]

An embodiment of this application provides an electric apparatus including at least one of the secondary battery according to any embodiment, the battery module according to any embodiment, or the battery pack according to any embodiment.

The electric apparatus includes at least one of the secondary battery, the battery module, or the battery pack provided in this application. The secondary battery, battery module, or battery pack can be used as a power source of the electric apparatus or as an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf cart, or an electric truck), an electric train, a ship, a satellite system, and an energy storage system, but is not limited thereto.

As an electric apparatus, the secondary battery, battery module, or battery pack can be selected based on its usage requirements.

FIG. 6 shows an electric apparatus as an example. The electric apparatus is a battery electric vehicle, a hybrid electric vehicle, a plug-in hybrid electric vehicle, or the like. To satisfy requirements of the electric apparatus for high power and high energy density of a secondary battery, a battery pack or a battery module may be used.

In another example, the apparatus may be a mobile phone, a tablet computer, a notebook computer, or the like. Such apparatus is typically required to be light and thin and may use a secondary battery as its power source.

**Examples**

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

**I. Preparation method**

Example 1

(1) Preparation of positive electrode active material

Sodium pyrophosphate, ferrous oxalate, and ammonium dihydrogen phosphate were dissolved in deionized water at a molar ratio of 1:2.9:2, and the resulting mixture was continuously stirred at room temperature for 30 min to obtain an initial mixed slurry. Super P and glucose were dissolved and mixed in deionized water to form a carbon solution. The carbon solution was then mixed with the initial mixed slurry and stirred to obtain a mixed solution. The mixed solution was spray-dried with an inlet air temperature of 220°C and an outlet air temperature of 109°C to obtain a powdered precursor. Ultimately, in an $N_2$ atmosphere, the temperature was raised at a velocity of 2°C to 320°C and held for 4 h, and the temperature was continued to be raised at the velocity of 2°C to 550°C and held for 10 h. The sintered product was crushed and sieved to obtain a $Na_4Fe_{2.9}(PO_4)_2P_2O_7/C$ positive electrode active material. Based on a total mass of the positive electrode active material, a mass percentage of a first carbon material formed from Super P was 1%, a mass percentage of a second carbon material formed from glucose was 1%, a median particle size $D_v50$ of the positive electrode active material was 3.0 $\mu$m, a compacted density of the positive electrode active material was 1.93 g/cm$^3$, and resistance of the positive electrode active material was 268 k$\Omega$·cm.

(2) Preparation of positive electrode plate

A 2.5wt% polyvinylidene fluoride binder was fully dissolved in N-methylpyrrolidone (NMP), then 2.0wt% Super P, 1.0wt% carbon nanotubes were added. The resulting mixture was stirred and mixed well with 94.5wt% positive electrode active material described above to obtain a positive electrode slurry. The slurry was evenly applied on a surface of a current collector aluminum foil and then transferred to a vacuum drying oven for complete drying. A dried electrode plate was rolled and punched to obtain a positive electrode plate. A compacted density of the positive electrode plate was 1.8 g/cm$^3$, and electrode plate resistance was 1 $\Omega \cdot$cm.

(3) Preparation of negative electrode plate

Carbon nanotubes and carboxymethyl cellulose (CMC) were added to deionized water at a mass ratio of 1:0.4 and stirred to form a uniform slurry, and the slurry was then applied on a surface of a negative electrode current collector copper foil. The copper foil was then transferred to a vacuum drying oven for complete drying and then punched to obtain a negative electrode plate with an anode-free structure. A thickness of a primer layer was 20 $\mu$m, and an areal density was 25 g/m$^2$.

(4) Electrolyte

In an argon atmosphere glove box (H$_2$O<0.1 ppm, O$_2$<0.1 ppm), a sodium salt sodium hexafluorophosphate NaPF$_6$ was dissolved in an organic solvent ethylene glycol dimethyl ether (DME), and stirred well to obtain an electrolyte with a sodium salt at a concentration of 1.5 mol/L.

(5) Separator

A polypropylene film was used as the separator.

(6) Preparation of battery

The positive electrode plate, the separator, and the negative electrode plate were stacked in sequence, such that the separator was located between the positive electrode plate and the negative electrode plate to provide isolation. The resulting stack was then wound to obtain a jelly roll. The jelly roll was welded with a tab and packaged into an aluminum shell, followed by baking at 80°C for water removal, injection of the electrolyte, and sealing to obtain an uncharged battery. The uncharged battery was subsequently subjected to standing, hot and cold pressing, formation, shaping, and capacity testing processes in sequence to obtain the anode-free sodium secondary battery product of Example 1.

Examples 2 to 24

Preparation methods of batteries in Examples 2 to 24 were similar to that of the battery in Example 1, but materials and parameters of the positive electrode active material and the materials of the primer layer of the negative electrode plate were adjusted, with specific parameters as shown in Table 1.

Comparative examples 1 to 9

Preparation methods of batteries in Comparative examples 1 to 9 were substantially similar to that of the battery in Example 1, but a carbon coating layer included only a carbon material derived from an inorganic carbon source or an organic carbon source, or the negative electrode plate did not include a primer layer, with specific parameters as shown in Table 1.

**II. Performance test**

1. Mixed slurry

(1) Test for particle size of particles in first mixed slurry

Testing was performed using a centrifugal sedimentation method and a laser particle size analyzer. A sample was first centrifuged, sedimented, and filtered to obtain a particle sample from an initial mixed slurry. Then, 0.1 g to 0.13 g of the particle sample under test was weighed using a 50 mL beaker, 5 g of acetone was added, a stirrer with a diameter of approximately 2.5 mm was placed, and sealing was performed using a preservative film. After ultrasonic treatment for 5 min, the sample was transferred to a magnetic stirrer and stirred at 500 rpm for more than 20 min, and two samples were taken from each batch of products for testing. The testing was performed using a Mastersizer 2000E laser particle size analyzer from Malvern Instruments Ltd., UK.

2. Performance test of positive electrode active material

(1) Test for median particle size $D_v50$

In accordance with GB/T 19077-2016 Particle Size Distribution Laser Diffraction Method, 0.1 g to 0.13 g of a positive electrode active material sample under test was weighed using a 50 mL beaker, 5 g of anhydrous ethanol was added, a stirrer with a diameter of approximately 2.5 mm was placed, and sealing was performed using a preservative film. After ultrasonic treatment for 5 min, the sample was transferred to a magnetic stirrer and stirred at 500 rpm for more than 20 min, and two samples were taken from each batch of products for testing. The testing was performed using a Mastersizer 2000E laser particle size analyzer from Malvern Instruments Ltd., UK.

(2) Compacted density

Testing was performed in accordance with GB/T 24533-2009 Powder Compacted Density Method: During compression under an external force, as the powder moved and deformed, voids were filled, a contact area between particles increased, attractive forces between atoms were generated, and mechanical fit between the particles was enhanced, forming a compact with a certain density:

$$pC=m/V=m/(S*H),$$

where in the formula, pC was a powder compacted density in $g/cm^3$, m was a sample mass in g; S was a mold base area in 1.327 $cm^2$; and H was a compacted thickness in cm.

A certain amount of powder was placed in a dedicated compaction mold, the mold was placed on a compacted density instrument, different pressures were set, and thicknesses of the powder under different pressures (thicknesses after pressure release) could be read on the equipment. The compacted density was calculated using $\rho=m/v$.

(3) Resistance test

A powder resistivity testing instrument was PRCD1100 from Initial Energy Science & Technology Co., Ltd., with a pressure range of 10 MPa to 400 MPa and a punch size of 78.54 $mm^2$.

Test: A certain amount of powder was placed in a dedicated compaction mold, the mold was then placed on a compacted density instrument, a pressure of 400 MPa was set, and the powder resistivity under a pressure of 400 MPa could be read on the equipment.

(4) Test for crystallinity of carbon material

Raman spectroscopy was used to test a carbon material in the positive electrode active material, where a ratio of a peak intensity $I_D$ in a range of 1300 $cm^{-1}$ to 1400 $cm^{-1}$ to a peak intensity $I_G$ in a range of 1580 $cm^{-1}$ to 1620 $cm^{-1}$, as measured by Raman spectroscopy, was taken as $I_D/I_G$. A smaller $I_D/I_G$ value indicated a higher crystallinity of the carbon material.

3. Performance test of electrode plate

(1) Compacted density

According to an embodiment of this application, the compacted density PD of the positive electrode film layer was determined by measuring a mass per unit area ($g/cm^2$) of a positive electrode film layer applied on one side and a thickness (cm) of the positive electrode film layer applied on one side (with more than 14 collection points). Specifically, the compacted density PD of the positive electrode film layer was equal to the mass per unit area ($g/cm^2$) of the positive electrode film layer applied on one side/the thickness (cm) of the positive electrode film layer.

(2) Electrode plate resistance

The dried positive electrode film layer was cut from the left, middle, and right of the positive electrode plate into small discs with a diameter of 3 cm. The power of an electrode plate resistance tester from Initial Energy Science & Technology Co., Ltd. was turned on, the disc was placed at an appropriate position of a probe of the electrode plate resistance tester, the "Start" button was clicked, and the reading was taken once the reading was stable. Two positions of each small disc were tested, and the average of the six measurements was calculated as the electrode plate resistance of the electrode plate.

4. Battery performance test

(1) Test for first-cycle discharge capacity

The first-cycle discharge capacity was tested in the following process: At 25°C, the prepared battery was charged at a constant current of 1C to 3.75 V, then charged at a constant voltage of 3.75 V until the current dropped to 0.05 C, and discharged at a constant current of 1C to 1.5 V to obtain the first-cycle discharge capacity (Cd1).

(2) Test for coulombic efficiency

The coulombic efficiency was tested in the following process: At 25°C, the prepared battery was charged at a constant current of 1/5C to 3.75 V, then charged at a constant voltage of 3.75 V until the current dropped to 0.05 C to obtain a first-cycle charge capacity (Cc1). Then, the battery was discharged at a constant current of 1/5C to 1.5 V to obtain a first-cycle discharge capacity (Cd1). The coulombic efficiency of the battery was calculated according to the following formula: coulombic efficiency of the battery=first-cycle discharge capacity (Cd1)/first-cycle charge capacity (Cc1). The test processes in the comparative examples and other examples were the same as above process.

(3) Test for cycling capacity retention rate of battery

A capacity retention rate of the battery was tested in the following process: At 25°C, the prepared battery was charged at a constant current of 1C to 3.75 V, then charged at a constant voltage of 3.75 V until the current dropped to 0.05C, and discharged at a constant current of 1C to 1.5 V to obtain a capacity which are denoted as an initial capacity (C0). The preceding steps were repeated on the same battery, a discharge capacity (Cn) of the battery after the n-th cycle was recorded, and a capacity retention rate Pn of the battery after each cycle was equal to Cn/C0×100%. A curve graph of the capacity retention rate of the battery versus the number of cycles was plotted with values of 100 points of P1, P2, ..., 100 as the vertical coordinates and the corresponding numbers of cycles as the horizontal coordinates. During this testing process, the initial cycle corresponded to n=1, the second cycle corresponded to n=2, ..., and the 100th cycle corresponded to n=100. The data of the capacity retention rates of the batteries corresponding to the examples or comparative examples in Table 2 were the data measured after 100 cycles under the above test conditions, that was, the value of P100. The test processes in the comparative examples and other examples were the same as the above process.

**III. Analysis of test results of examples and comparative examples**

The batteries in examples and comparative examples were prepared according to the above methods, and various performance parameters were measured, with results shown in Tables 1 and 2 below.

Table 1

| No. | Positive electrode active material | | | | | | Positive electrode plate | | | Negative electrode plate |
|---|---|---|---|---|---|---|---|---|---|---|
| | Name | First carbon material | | Second carbon material | | Median particle size $D_v50$ of positive electrode active material ($\mu$m) | Mass percentage of PVDF binder (%) | Mass percentage of carbon nanotube conductive agent (%) | Mass percentage of super P conductive agent (%) | Primer layer |
| | | Material | Mass percentage (%) | Material | Mass percentage (%) | | | | | |
| Example 1 | $Na_4Fe_{2.9}(PO_4)_2P_2O_7$ | Super p | 1 | Glucose | 1 | 3.00 | 2.5 | 1.0 | 2.0 | Carbon nanotubes |
| Example 2 | $Na_4Fe_{2.9}(PO_4)_2P_2O_7$ | Super p | 1 | Glucose | 2 | 3.00 | 2.5 | 1.0 | 2.0 | Carbon nanotubes |
| Example 3 | $Na_4Fe_{2.9}(PO_4)_2P_2O_7$ | Super p | 1 | Citric acid | 1 | 3.00 | 2.5 | 1.0 | 2.0 | Carbon nanotubes |
| Example 4 | $Na_4Fe_{2.9}(PO_4)_2P_2O_7$ | Super p | 1 | Citric acid | 1 | 3.00 | 2.0 | 1.0 | 2.5 | Carbon nanotubes |
| Example 5 | $Na_4Fe_{2.9}(PO_4)_2P_2O_7$ | Super p | 0.5 | Glucose | 1 | 3.00 | 2.5 | 1.0 | 2.0 | Carbon nanotubes |
| Example 6 | $Na_4Fe_{2.9}(PO_4)_2P_2O_7$ | Super p | 1 | Glucose | 1 | 3.00 | 2.5 | 0.5 | 2.0 | Carbon nanotubes |
| Example 7 | $Na_4Fe_{2.9}(PO_4)_2P_2O_7$ | Super p | 1 | Glucose | 1 | 3.00 | 2.5 | 1.0 | 2.0 | Graphene |
| Example 8 | $Na_4Fe_{2.9}(PO_4)_2P_2O_7$ | Super p | 1 | Glucose | 1 | 3.00 | 2.5 | 1.0 | 2.0 | Aluminum oxide |
| Example 9 | $Na_4Fe_{2.9}(PO_4)_2P_2O_7$ | Super p | 1 | Glucose | 1 | 3.00 | 2.5 | 1.0 | 2.0 | Carbon black |
| Example 10 | $Na_4Fe_{2.95}(PO_4)_2P_2O_7$ | Graphene | 1 | Citric acid | 1 | 3.00 | 2.5 | 1.0 | 2.0 | Carbon nanotubes |
| Example 11 | $Na_4Fe_{2.95}(PO_4)_2P_2O_7$ | Super p | 1 | Glucose | 1 | 1.50 | 2.5 | 1.0 | 2.0 | Carbon nanotubes |

EP 4 636 857 A1

| No. | Positive electrode active material | | | | | | Positive electrode plate | | | Negative electrode plate |
| | | First carbon material | | Second carbon material | | Median particle size $D_v50$ of positive electrode active material ($\mu m$) | Mass percentage of PVDF binder (%) | Mass percentage of carbon nanotube conductive agent (%) | Mass percentage of super P conductive agent (%) | |
| | Name | Material | Mass percentage (%) | Material | Mass percentage (%) | | | | | Primer layer |
|---|---|---|---|---|---|---|---|---|---|---|
| Example 12 | $Na_4Fe_{2.95}(PO_4)_2P_2O_7$ | Super p | 1 | Glucose | 0.5 | 1.50 | 2.5 | 1.0 | 2.0 | Carbon nanotubes |
| Example 13 | $Na_4Fe_{2.95}(PO_4)_2P_2O_7$ | Carbon nanotubes | 1 | Glucose | 0.5 | 3.00 | 2.5 | 1.0 | 2.0 | Carbon nanotubes |
| Example 14 | $Na_4Fe_{2.95}(PO_4)_2P_2O_7$ | Carbon nanotubes | 1 | Glucose | 2 | 3.00 | 2.0 | 1.0 | 2.0 | Carbon nanotubes |
| Example 15 | $Na_4Fe_3(PO_4)_2P_2O_7$ | Carbon nanotubes | 1 | Glucose | 0.5 | 1.50 | 2.0 | 1.0 | 2.0 | Carbon nanotubes |
| Example 16 | $Na_4Fe_3(PO_4)_2P_2O_7$ | Carbon nanotubes | 1 | Glucose | 1 | 3.00 | 2.5 | 1.0 | 2.0 | Carbon nanotubes |
| Example 17 | $Na_4Fe_{2.8}(PO_4)_2P_2O_7$ | Carbon nanotubes | 1 | Glucose | 1 | 1.50 | 2.5 | 1.0 | 2.0 | Carbon nanotubes |
| Example 18 | $Na_4Fe_{2.8}(PO_4)_2P_2O_7$ | Carbon nanotubes | 1 | Citric acid | 1 | 1.50 | 2.0 | 1.0 | 2.0 | Carbon nanotubes |
| Example 19 | $Na_{4.1}Fe_3(PO_4)_2P_2O_7$ | Super p | 1 | Citric acid | 1 | 3.00 | 2.5 | 1.0 | 2.0 | Carbon nanotubes |
| Example 20 | $Na_{4.1}Fe_3(PO_4)_2P_2O_7$ | Super p | 1 | Glucose | 1 | 3.00 | 2.5 | 1.0 | 2.0 | Carbon nanotubes |
| Example 21 | $Na_4Fe_{2.8}Mn_{0.1}(PO_4)_2P_2O_7$ | Super p | 1 | Glucose | 1 | 3.00 | 2.5 | 1.0 | 2.0 | Carbon nanotubes |
| Example 22 | $Na_4Fe_{2.8}Mn_{0.1}(PO_4)_2P_2O_7$ | Super p | 1 | Glucose | 0.5 | 1.50 | 2.5 | 1.0 | 2.0 | Carbon nanotubes |

EP 4 636 857 A1

| No. | Name | Positive electrode active material | | | | | Positive electrode plate | | | Negative electrode plate |
|---|---|---|---|---|---|---|---|---|---|---|
| | | First carbon material | | Second carbon material | | Median particle size $D_v50$ of positive electrode active material (μm) | Mass percentage of PVDF binder (%) | Mass percentage of carbon nanotube conductive agent (%) | Mass percentage of super P conductive agent (%) | Primer layer |
| | | Material | Mass percentage (%) | Material | Mass percentage (%) | | | | | |
| Example 23 | $Na_4Fe_{2.8}Mn_{0.1}(PO_4)_2P_2O_7$ | Super p | 1 | Glucose | 2 | 3.00 | 2.5 | 1.0 | 2.0 | Carbon nanotubes |
| Example 24 | $Na_4Mn_{2.9}(PO_4)_2P_2O_7$ | Super p | 1 | Glucose | 1 | 3.00 | 2.5 | 1.0 | 2.0 | Carbon nanotubes |
| Comparative example 1 | $Na_4Fe_{2.9}(PO_4)_2P_2O_7$ | Super p | 1 | / | / | 3.00 | 2.5 | 1.0 | 2.0 | Carbon nanotubes |
| Comparative example 2 | $Na_4Fe_{2.9}(PO_4)_2P_2O_7$ | / | / | Glucose | 1 | 3.00 | 2.5 | 1.0 | 2.0 | Carbon nanotubes |
| Comparative example 3 | $Na_4Fe_{2.95}(PO_4)_2P_2O_7$ | / | / | Glucose | 1 | 1.50 | 2.5 | 1.0 | 2.0 | Carbon nanotubes |
| Comparative example 4 | $Na_4Fe_3(PO_4)_2P_2O_7$ | / | / | Glucose | 1 | 3.00 | 2.5 | 1.0 | 2.0 | Carbon nanotubes |
| Comparative example 5 | $Na_4Fe_{2.8}Mn_{0.1}(PO_4)_2P_2O_7$ | / | / | Glucose | 1 | 3.00 | 2.5 | 1.0 | 2.0 | Carbon nanotubes |
| Comparative example 6 | $Na_{4.1}Fe_3(PO_4)_2P_2O_7$ | / | / | Glucose | 1 | 3.00 | 2.5 | 1.0 | 2.0 | Carbon nanotubes |
| Comparative example 7 | $Na_4Mn_{2.9}(PO_4)_2P_2O_7$ | / | / | Glucose | 1 | 3.00 | 2.5 | 1.0 | 2.0 | Carbon nanotubes |
| Comparative example 8 | $Na_4Fe_{2.9}(PO_4)_2P_2O_7$ | / | / | Glucose | 1 | 3.00 | 2.5 | 1.0 | 2.0 | None |

(continued)

| No. | Positive electrode active material | | | | | | | Positive electrode plate | | | Negative electrode plate |
|---|---|---|---|---|---|---|---|---|---|---|---|
| | Name | First carbon material | | Second carbon material | | Median particle size $D_v50$ of positive electrode active material ($\mu$m) | Mass percentage of PVDF binder (%) | Mass percentage of carbon nanotube conductive agent (%) | Mass percentage of super P conductive agent (%) | Primer layer |
| | | Material | Mass percentage (%) | Material | Mass percentage (%) | | | | | |
| Comparative example 9 | $Na_4Fe_{2.9}(PO_4)_2P_2O_7$ | Super p | 1 | / | / | 3.00 | 2.5 | 1.0 | 2.0 | None |

Note: In Table 1, "/" indicates the inclusion of this material.

**Table 2**

| No. | Positive electrode active material | | Positive electrode plate | | Battery | | |
|---|---|---|---|---|---|---|---|
| | Compacted density of positive electrode active material (g/cm$^3$) | Resistance of positive electrode active material (kΩ·cm) | Compacted density (g/cm$^3$) | Electrode plate resistance (Ω·cm) | First-cycle discharge capacity (mAh g$^{-1}$) | First-cycle coulombic efficiency | Capacity retention rate after 100 cycles |
| Example 1 | 1.93 | 268 | 1.8 | 1 | 115.6 | 98.60% | 98.60% |
| Example 2 | 2.00 | 12.6 | 1.85 | 0.4 | 114.2 | 99.60% | 98.80% |
| Example 3 | 1.93 | 204 | 1.8 | 0.6 | 115.9 | 99.20% | 98.40% |
| Example 4 | 1.93 | 204 | 1.8 | 0.9 | 116.6 | 99.60% | 99.20% |
| Example 5 | 1.92 | 375 | 1.8 | 1.1 | 116.8 | 98.20% | 98.20% |
| Example 6 | 1.93 | 268 | 1.8 | 0.7 | 115.3 | 98.20% | 98.30% |
| Example 7 | 1.93 | 268 | 1.8 | 0.5 | 115.6 | 99.60% | 98.80% |
| Example 8 | 1.93 | 268 | 1.8 | 0.5 | 115.6 | 96.60% | 96.80% |
| Example 9 | 1.93 | 268 | 1.8 | 0.5 | 115.6 | 93.60% | 92.80% |
| Example 10 | 1.96 | 1.985 | 1.81 | 0.1 | 115.9 | 99.2% | 99.40% |
| Example 11 | 1.95 | 63.5 | 1.8 | 0.6 | 115.6 | 99.60% | 98.80% |
| Example 12 | 1.90 | 186 | 1.85 | 0.9 | 115.6 | 99.60% | 98.80% |
| Example 13 | 1.94 | 5.12 | 2.1 | 0.2 | 115.9 | 98.50% | 98.20% |
| Example 14 | 2.00 | 1.02 | 2.05 | 0.1 | 115.9 | 99.30% | 99.20% |
| Example 15 | 1.95 | 12.4 | 1.92 | 0.1 | 111.8 | 99.60% | 99.20% |
| Example 16 | 1.92 | 2.13 | 1.88 | 0.3 | 111.5 | 98.80% | 96.40% |
| Example 17 | 1.94 | 1.98 | 1.9 | 0.2 | 108.2 | 99.80% | 98.10% |
| Example 18 | 1.94 | 1.75 | 1.8 | 0.4 | 109.5 | 99.60% | 92.90% |
| Example 19 | 1.93 | 198 | 1.9 | 0.8 | 106.5 | 91.80% | 96.00% |
| Example 20 | 1.93 | 252 | 1.8 | 1 | 105.2 | 89.80% | 93.30% |
| Example 21 | 1.90 | 136 | 1.8 | 0.9 | 116.8 | 99.10% | 98.20% |
| Example 22 | 1.92 | 236 | 1.95 | 1 | 116.8 | 98.20% | 97.30% |
| Example 23 | 2.00 | 11.3 | 2 | 0.3 | 115.6 | 98.60% | 98.20% |
| Example 24 | 1.94 | 213 | 1.8 | 1 | 98.5 | 98.20% | 97.80% |
| Comparative example 1 | 2.10 | 365 | 2.1 | 0.3 | 113.6 | 93.50% | 88.50% |
| Comparative example 2 | 1.90 | 5123 | 1.85 | 1.5 | 115.2 | 97.70% | 96.20% |
| Comparative example 3 | 1.91 | 3458 | 1.9 | 0.8 | 115.6 | 98.80% | 96.90% |
| Comparative example 4 | 1.90 | 5352 | 1.85 | 1.5 | 108.2 | 97.50% | 96.30% |
| Comparative example 5 | 1.90 | 3125 | 1.88 | 1.2 | 114.2 | 97.20% | 96.50% |

(continued)

| No. | Positive electrode active material | | Positive electrode plate | | Battery | | |
|---|---|---|---|---|---|---|---|
| | Compacted density of positive electrode active material ($g/cm^3$) | Resistance of positive electrode active material ($k\Omega\cdot cm$) | Compacted density ($g/cm^3$) | Electrode plate resistance ($\Omega\cdot cm$) | First-cycle discharge capacity ($mAh\ g^{-1}$) | First-cycle coulombic efficiency | Capacity retention rate after 100 cycles |
| Comparative example 6 | 1.90 | 6918 | 1.85 | 1.5 | 104.2 | 89.50% | 92.80% |
| Comparative example 7 | 1.91 | 2152 | 1.85 | 0.9 | 96.4 | 96.20% | 95.60% |
| Comparative example 8 | 1.90 | 5123 | 1.85 | 1.5 | 115.2 | 84.30% | 76.20% |
| Comparative example 9 | 2.10 | 365 | 2.1 | 0.3 | 113.6 | 82.50% | 78.50% |

It can be seen from the above results that Examples 1 to 24 each include a positive electrode active material, where the positive electrode active material includes:

a polyanion compound, where the polyanion compound has the following general formula:

$$Na_xR_y(PO_4)_z(P_2O_7)_k,$$

where R includes at least one of Mg, Al, Sc, Ti, V, Cr, Mn, Fe, Co, Ni, Cu, Zn, Zr, Nb, Mo, Sn, Hf, Ta, W, and Pb, $1\leq x\leq 7$, $1\leq y\leq 4$, $1\leq z\leq 2$, and $1\leq k\leq 4$; and
a first carbon material and a second carbon material on at least a portion of a surface of the polyanion compound, where a crystallinity of the first carbon material is higher than that of the second carbon material.

From the comparison of Examples 1 to 6 with Comparative examples 1 and 2, the comparison of Examples 11 and 12 with Comparative example 3, the comparison of Examples 15 and 16 with Comparative example 4, the comparison of Examples 19 and 20 with Comparative example 6, the comparison of Examples 21 to 23 with Comparative example 5, and the comparison of Example 24 with Comparative example 7, it can be seen that compared to a conventional positive electrode active material that includes only a carbon material derived from an inorganic carbon source or an organic carbon source, the positive electrode active material of this application, which includes carbon materials derived from both an inorganic carbon source and an organic carbon source, facilitates improvement in the first-cycle coulombic efficiency and the capacity retention rate after 100 cycles of the battery.

From the comparison of Examples 1 to 9 with Comparative examples 8 and 9, it can be seen that compared to a conventional positive electrode active material that includes only a carbon material derived from an inorganic carbon source or an organic carbon source and a negative electrode plate that does not include a primer layer, the positive electrode active material of this application, which includes carbon materials derived from both an inorganic carbon source and an organic carbon source, and the negative electrode plate that includes a primer layer, facilitate significant improvement in the first-cycle coulombic efficiency and the capacity retention rate after 100 cycles of the battery.

From the comparison of Examples 1 and 7 with Examples 8 and 9, it can be seen that compared to a negative electrode plate where a primer layer includes aluminum oxide or carbon black, a negative electrode plate where the primer layer includes carbon nanotubes or graphene facilitates further improvement in the first-cycle coulombic efficiency and the capacity retention rate after 100 cycles of a battery.

From the comparison of Examples 10, 13, 14, 17, and 18 with Comparative example 4, it can be seen that compared to the $Na_4Fe_3(PO_4)_2P_2O_7$ positive electrode active material, the $Na_4Fe_{2.95}(PO_4)_2P_2O_7$ positive electrode active material or the $Na_4Fe_{2.8}(PO_4)_2P_2O_7$ positive electrode active material, due to the presence of iron defects, facilitates improvement in the compacted density of the positive electrode active material, reduction in the resistance of the positive electrode active material and the electrode plate resistance of the positive electrode plate, and improvement in the capacity retention rate after 100 cycles of the battery.

From the comparison of Examples 11 and 12 with Comparative example 3, the comparison of Examples 15 and 16 with Comparative example 4, and the comparison of Examples 21 to 23 with Comparative example 5, it can be seen that based on a total mass of the positive electrode active material, controlling a mass percentage of the second carbon material to be 0.5% to 2% facilitates reduction in the resistance of the positive electrode active material and improvement in the first-cycle coulombic efficiency and the capacity retention rate after 100 cycles of the battery.

**Claims**

1. A positive electrode active material, **characterized in that** the positive electrode active material comprises:

   a polyanion compound, wherein the polyanion compound has the following general formula:

   $$Na_xR_y(PO_4)_z(P_2O_7)_k,$$

   wherein R comprises at least one of Mg, Al, Sc, Ti, V, Cr, Mn, Fe, Co, Ni, Cu, Zn, Zr, Nb, Mo, Sn, Hf, Ta, W, and Pb, $1 \leq x \leq 7$, $1 \leq y \leq 4$, $1 \leq z \leq 2$, and $1 \leq k \leq 4$; and
   a first carbon material and a second carbon material compounded with the polyanion compound, wherein a crystallinity of the first carbon material is higher than that of the second carbon material.

2. The positive electrode active material according to claim 1, **characterized in that** an $I_D/I_G$ value of the first carbon material is less than 0.8, an $I_D/I_G$ value of the second carbon material is greater than 0.8 and less than 1.2, and the $I_D/I_G$ value is a ratio of a peak intensity $I_D$ in a range of 1300 cm$^{-1}$ to 1400 cm$^{-1}$ to a peak intensity $I_G$ in a range of 1580 cm$^{-1}$ to 1620 cm$^{-1}$, as measured by Raman spectroscopy.

3. The positive electrode active material according to claim 1 or 2, **characterized in that** the first carbon material is distributed in a granular form among primary particles of the polyanion compound.

4. The positive electrode active material according to any one of claims 1 to 3, **characterized in that** the second carbon material is applied on a surface of the primary particles of the polyanion compound in a form of a carbon film.

5. The positive electrode active material according to claim 3 or 4, **characterized in that** a median particle size $D_v50$ of the primary particles of the polyanion compound is 0.1 $\mu$m to 2.0 $\mu$m.

6. The positive electrode active material according to any one of claims 1 to 5, **characterized in that** based on a total mass of the positive electrode active material, a mass percentage of the first carbon material is 0.1% to 5%, optionally 0.5% to 2%, and a mass percentage of the second carbon material is 0.1% to 10%, optionally 0.5% to 2%.

7. The positive electrode active material according to any one of claims 1 to 6, **characterized in that** a median particle size $D_v50$ of the positive electrode active material is 1.0 $\mu$m to 10 $\mu$m, optionally 1.5 $\mu$m to 5.0 $\mu$m.

8. The positive electrode active material according to any one of claims 1 to 7, **characterized in that** a powder compacted density of the positive electrode active material under a pressure of 400 MPa is 1.5 g/cm$^3$ to 3 g/cm$^3$.

9. The positive electrode active material according to any one of claims 1 to 8, **characterized in that** powder resistance of the positive electrode active material at 25°C is 1 k$\Omega$·cm to 375 k$\Omega$·cm.

10. A preparation method of a positive electrode active material, **characterized by** comprising the following step:
    mixing and calcining a sodium source, an R source, a phosphorus source, a first carbon source, and a second carbon source to prepare the positive electrode active material, wherein the positive electrode active material comprises:

    a polyanion compound, wherein the polyanion compound has the following general formula:

    $$Na_xR_y(PO_4)_z(P_2O_7)_k,$$

    wherein R comprises at least one of Mg, Al, Sc, Ti, V, Cr, Mn, Fe, Co, Ni, Cu, Zn, Zr, Nb, Mo, Sn, Hf, Ta, W, and Pb, $1 \leq x \leq 7$, $1 \leq y \leq 4$, $1 \leq z \leq 2$, and $1 \leq k \leq 4$; and
    a first carbon material and a second carbon material compounded with the polyanion compound, wherein a crystallinity of the first carbon material is higher than that of the second carbon material,
wherein the first carbon material is derived from the first carbon source, and the second carbon material is derived from the second carbon source.

11. The preparation method of a positive electrode active material according to claim 10, **characterized in that** the first carbon source is an inorganic carbon source, and the inorganic carbon source comprises one or more of natural graphite, artificial graphite, carbon black, carbon nanotubes, and graphene.

12. The preparation method of a positive electrode active material according to claim 10 or 11, **characterized in that** the second carbon source is an organic carbon source, and the organic carbon source comprises one or more of sucrose, glucose, citric acid, starch, cyclodextrin, asphalt, polyethylene glycol, and polyvinyl alcohol.

13. The preparation method of a positive electrode active material according to any one of claims 10 to 12, **characterized in that** the mixing and calcining a sodium source, an R source, a phosphorus source, a first carbon source, and a second carbon source to prepare the positive electrode active material specifically comprises:

dissolving the sodium source, the R source, and the phosphorus source in a solvent and grinding to obtain a first mixed slurry,
dispersing the first carbon source and the second carbon source in a solvent to obtain a carbon dispersion; and
mixing the first mixed slurry and the carbon dispersion, followed by drying and calcining, to prepare the positive electrode active material.

14. The preparation method of a positive electrode active material according to any one of claims 10 to 13, **characterized in that** $D_v50$ of particles in the first mixed slurry is 0.05 $\mu$m to 1.5 $\mu$m, preferably 0.1 $\mu$m to 0.8 $\mu$m.

15. The preparation method of a positive electrode active material according to any one of claims 10 to 14, **characterized in that** the R source comprises one or more of a magnesium source, an aluminum source, a scandium source, a titanium source, a vanadium source, a chromium source, a manganese source, an iron source, a cobalt source, a nickel source, a copper source, a zinc source, a zirconium source, a niobium source, a molybdenum source, a tin source, a hafnium source, a tantalum source, a tungsten source, and a lead source.

16. The preparation method of a positive electrode active material according to any one of claims 10 to 15, **characterized in that** the iron source comprises one or more of ferrous oxalate, ferric nitrate, ferrous sulfate, ferrous chloride, ferric oxalate, ferric acetate, ferric oxide, ferrous oxide, and metallic iron.

17. A positive electrode plate, **characterized by** comprising a positive electrode film layer, wherein the positive electrode film layer comprises the positive electrode active material according to any one of claims 1 to 9 or a positive electrode active material prepared by the preparation method of a positive electrode active material according to any one of claims 10 to 16.

18. The positive electrode plate according to claim 17, **characterized in that** the positive electrode film layer further comprises at least one of a one-dimensional conductive material and a zero-dimensional conductive material.

19. The positive electrode plate according to claim 17 or 18, **characterized in that** the one-dimensional conductive material comprises one or more of single-walled carbon nanotubes, multi-walled carbon nanotubes, and few-walled carbon nanotubes, and/or
based on a total mass of the positive electrode film layer, a mass percentage of the one-dimensional conductive material is 0.2% to 1%, optionally 0.5% to 1%.

20. The positive electrode plate according to any one of claims 17 to 19, **characterized in that** the zero-dimensional conductive material comprises one or more of Super P, Ketjen black, and acetylene black, and/or
based on the total mass of the positive electrode film layer, a mass percentage of the zero-dimensional conductive material is 1% to 3%, optionally 2% to 2.8%.

21. The positive electrode plate according to any one of claims 17 to 20, **characterized in that** the positive electrode film layer further comprises a binder, and based on the total mass of the positive electrode film layer, a mass percentage of the binder is 1.5% to 3%, optionally 2.0% to 2.5%.

22. The positive electrode plate according to any one of claims 17 to 21, **characterized in that** a compacted density of the positive electrode film layer is 1.7 g/cm$^3$ to 2.3 g/cm$^3$.

23. The positive electrode plate according to any one of claims 17 to 22, **characterized in that** electrode plate resistance of the positive electrode plate is 0.1 $\Omega \cdot$cm to 10 $\Omega \cdot$cm.

24. A secondary battery, **characterized by** comprising a negative electrode plate and the positive electrode plate according to any one of claims 17 to 23.

25. The secondary battery according to claim 24, **characterized in that** the secondary battery is an anode-free sodium secondary battery.

26. The secondary battery according to claim 24 or 25, **characterized in that** the negative electrode plate comprises a negative electrode current collector and a primer layer disposed on at least one surface of the negative electrode current collector, and the primer layer comprises one or more of carbon nanotubes, graphite, graphene, carbon black, aluminum oxide, silver-carbon composite nanoparticles, and tin-carbon composite nanoparticles.

27. The secondary battery according to claim 26, **characterized in that** an areal density of the primer layer is 5 g/m$^2$ to 50 g/m$^2$.

28. The secondary battery according to claim 26 or 27, **characterized in that** a thickness of the primer layer is 2 $\mu$m to 100 $\mu$m.

29. An electric apparatus, **characterized by** comprising the secondary battery according to any one of claims 24 to 28.

FIG. 1

FIG. 2

EP 4 636 857 A1

FIG. 3

FIG. 4

FIG. 5

FIG. 6

## INTERNATIONAL SEARCH REPORT

| International application No. |
| --- |
| **PCT/CN2023/123524** |

| A. | CLASSIFICATION OF SUBJECT MATTER |
| --- | --- |

H01M4/36(2006.01)i; H01M4/58(2010.01)i; H01M4/62(2006.01)i; H01M4/04(2006.01)i

According to International Patent Classification (IPC) or to both national classification and IPC

| B. | FIELDS SEARCHED |
| --- | --- |

Minimum documentation searched (classification system followed by classification symbols)

IPC:H01M4/-

Documentation searched other than minimum documentation to the extent that such documents are included in the fields searched

Electronic data base consulted during the international search (name of data base and, where practicable, search terms used)

CNABS, CNTXT, ENTXTC, OETXT, VEN, WPABSC, CNKI, ISI WEB OF SCIENCE: 包覆, 第二, 第二碳材料, 第一, 第一碳材料, 电池, 淀粉, 环糊精, 聚乙二醇, 聚乙烯醇, 聚阴离子, 沥青, 两种, 钠, 纳米碳管, 柠檬酸, 葡萄糖, 石墨, 碳, 碳纳米管, 炭黑, 无机碳, 有机碳, 蔗糖, 正极, polyanionic sodium-ion battery, cathode, carbon

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116741975 A (BEIJING INSTITUTE OF TECHNOLOGY) 12 September 2023 (2023-09-12) <br> claims 1-9 | 1-29 |
| PX | WO 2023174152 A1 (HUBEI WANRUN NEW ENERGY TECHNOLOGY CO., LTD.) 21 September 2023 (2023-09-21) <br> description, paragraphs 13-39 | 1-29 |
| X | CN 114649520 A (HENAN UNIVERSITY) 21 June 2022 (2022-06-21) <br> description, paragraphs 6-15 and 34 | 1-29 |
| X | WO 2021181197 A1 (SEMICONDUCTOR ENERGY LABORATORY CO., LTD.) 16 September 2021 (2021-09-16) <br> claims 1-25 | 1-29 |
| A | JP 2018006156 A (TAIHEIYO CEMENT CORP.) 11 January 2018 (2018-01-11) <br> claims 1-8 | 1-29 |
| A | CN 105027337 A (SONY CORP.) 04 November 2015 (2015-11-04) <br> claims 1-12 | 1-29 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 November 2023** | **14 November 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/123524**

| Patent document cited in search report | | | Publication date (day/month/year) | Patent family member(s) | | | Publication date (day/month/year) |
|---|---|---|---|---|---|---|---|
| CN | 116741975 | A | 12 September 2023 | None | | | |
| WO | 2023174152 | A1 | 21 September 2023 | None | | | |
| CN | 114649520 | A | 21 June 2022 | None | | | |
| WO | 2021181197 | A1 | 16 September 2021 | None | | | |
| JP | 2018006156 | A | 11 January 2018 | JP | 6357193 | B2 | 11 July 2018 |
| CN | 105027337 | A | 04 November 2015 | WO | 2014141960 | A1 | 18 September 2014 |
| | | | | US | 2016043398 | A1 | 11 February 2016 |
| | | | | US | 9825296 | B2 | 21 November 2017 |
| | | | | JP | 2014175238 | A | 22 September 2014 |
| | | | | JP | 6028630 | B2 | 16 November 2016 |

Form PCT/ISA/210 (patent family annex) (July 2022)